# FASCICULE DE BREVET EUROPEEN

(11) **EP 1 072 812 B1**
(45) Date de publication et mention de la délivrance du brevet: **05.04.2006**
(21) Numéro de dépôt: 00401999.8
(22) Date de dépôt: 11.07.2000
(51) Int. Cl.: F16D 23/06

(54) **Ensemble synchroniseur de marche arrière pour une transmission d'un véhicule automobile**
Kraftfahrzeugwechselgetriebe mit synchronisiertem Rückwartsgang
Gearbox with synchronised reverse gear for motor vehicles

(30) Priorité: 27.07.1999 FR 9909732
(43) Date de publication de la demande: 31.01.2001
(73) Titulaire: Peugeot Citroen Automobiles SA, 92200 Neuilly sur Seine (FR)
(72) Inventeur: Bertolino, Walter, 78780 Maurecourt (FR)
(74) Mandataire: Thinat, Michel

(56) Documents cités:
- FR-A- 2 770 599
- US-A- 4 640 141

## Description

La présente invention concerne un ensemble synchroniseur de marche arrière pour une transmission d'un véhicule automobile.

Les ensembles de synchronisation, qui sont utilisés dans des transmissions manuelles pour véhicules automobiles, ont généralement une construction encombrante et nécessitent un nombre relativement important de pièces.

Un tel ensemble est par exemple connu du document FR 2 770 599. La présente invention a pour but d'éliminer les inconvénients ci-dessus en proposant un ensemble synchroniseur de marche arrière d'une construction simplifiée, peu encombrante, et par conséquent n'exigeant qu'un minimum de pièces.

A cet effet, l'ensemble synchroniseur de marche arrière pour une transmission d'un véhicule automobile, du type comprenant, montés sur un arbre intermédiaire, un pignon intermédiaire de marche arrière en engrènement avec un pignon moteur de marche arrière porté par un arbre primaire, un manchon de crabotage pouvant être déplacé axialement suivant l'arbre intermédiaire par une fourchette de commande, une bague de synchronisation adjacente au manchon de crabotage et pouvant être déplacée axialement par celui-ci, et un pignon de transmission à couronne de crabotage, monté sur l'arbre intermédiaire et axialement espacé de la bague de synchronisation qui peut être liée en rotation par friction au pignon lors d'un déplacement axial du manchon de crabotage vers le pignon, est caractérisé en ce que le manchon de crabotage et le pignon intermédiaire de marche arrière sont réalisés en une seule pièce avec le pignon intermédiaire monté axialement coulissant et librement en rotation relativement à l'arbre intermédiaire.

Avantageusement, l'ensemble synchroniseur comprend un jonc élastique ouvert d'armement de configuration plane, comprenant trois portions rentrantes, chacune située entre deux portions saillantes adjacentes du jonc, et logées dans une partie annulaire de la bague de synchronisation en regard du manchon de crabotage, chaque portion saillante du jonc d'armement faisant saillie radialement à l'extérieur de la partie annulaire de la bague de synchronisation, et le manchon de crabotage est agencé pour contacter, lors de son déplacement axial relatif vers le pignon de transmission, les côtés des portions saillantes du jonc d'armement pour déplacer axialement et concomitamment le jonc d'armement puis par ce dernier la bague de synchronisation qui est amenée en engagement par friction avec le pignon de transmission.

Le manchon de crabotage comprend des portions de surfaces internes tronconiques formant rampes réalisées entre des dents internes d'entrée du manchon de crabotage et des dents internes arrière de ce manchon qui définissent respectivement deux passages circulaires de plus grand diamètre et de plus petit diamètre, les portions formant rampes étant situées de façon adjacente aux portions saillantes du jonc pour les contacter et déplacer axialement le jonc tout en le comprimant radialement lors du déplacement axial du manchon de crabotage et l'amener en contact par friction dans le passage circulaire interne de plus petit diamètre du manchon de crabotage.

La bague de synchronisation a sa partie de logement des portions rentrantes du jonc d'armement logée dans le manchon de crabotage et son passage central en partie délimité par une surface tronconique pouvant venir en contact par friction sur une portée tronconique conjuguée du pignon de transmission lors du déplacement axial du manchon de crabotage et comporte, à l'opposé du manchon de crabotage, trois secteurs dentés externes pouvant venir en engrènement avec les dents internes du manchon de crabotage lors du déplacement axial de ce dernier qui comporte trois segments d'indexation faisant saillie de la face radiale d'extrémité du manchon de crabotage et s'engageant respectivement dans trois espaces définis chacun entre deux secteurs dentés adjacents de la bague de synchronisation.

Selon une variante de réalisation, les trois portions rentrantes du jonc d'armement sont maintenues dans la partie annulaire de la bague de synchronisation par un anneau d'arrêt logé dans trois rainures arquées radialement internes, chacune réalisée dans un segment arqué coaxial faisant saillie d'une face radiale d'extrémité de la bague de synchronisation.

Selon une autre variante de réalisation, la partie annulaire de la bague de synchronisation servant de logement aux portions rentrantes du jonc d'armement comprend trois fenêtres arquées radiales à travers lesquelles font saillie respectivement les trois portions saillantes du jonc d'armement.

La bague de synchronisation est maintenue axialement relativement au pignon de transmission, dans le sens opposé à celui d'engagement par friction avec ce dernier, par un anneau d'arrêt monté dans une gorge externe d'une partie annulaire solidaire du pignon de tranmission.

La fourchette de commande agit directement sur le pignon intermédiaire qui est monté sur une bague formant palier en un matériau à faible coefficient de frottement et portée par l'arbre intermédiaire.

La fourchette de commande est montée à coulissement sur un axe fixe comportant deux encoches dans l'une desquelles est engagée une bille d'indexation logée dans la fourchette et rappelée élastiquement vers l'axe par un ressort hélicoïdal de façon à maintenir la fourchette à une position de point mort du pignon intermédiaire ou une position de maintien de celui-ci en marche arrière.

L'invention vise également une boîte de vitesses pour véhicule automobile et qui est caractérisée en ce qu'elle comprend l'ensemble synchroniseur de marche arrière tel que défini précédemment.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention.

La figure 1 représente schématiquement l'architecture d'une boîte de vitesses d'un véhicule automobile comprenant l'ensemble synchroniseur de marche arrière de l'invention.

La figure 2 est une vue en coupe longitudinale de l'ensemble synchroniseur de marche arrière de l'invention.

La figure 3 est une vue en perspective éclatée de l'ensemble synchroniseur de la figure 1.

La figure 4 est une vue en perspective éclatée suivant la flèche III de l'ensemble synchroniseur de la figure 3.

La figure 5 représente en perspective éclatée une variante de réalisation de la bague de synchronisation de l'ensemble synchroniseur de l'invention.

La figure 6 représente un mode de réalisation d'une fourchette de commande du déplacement du pignon intermédiaire de marche arrière de l'ensemble synchroniseur de l'invention.

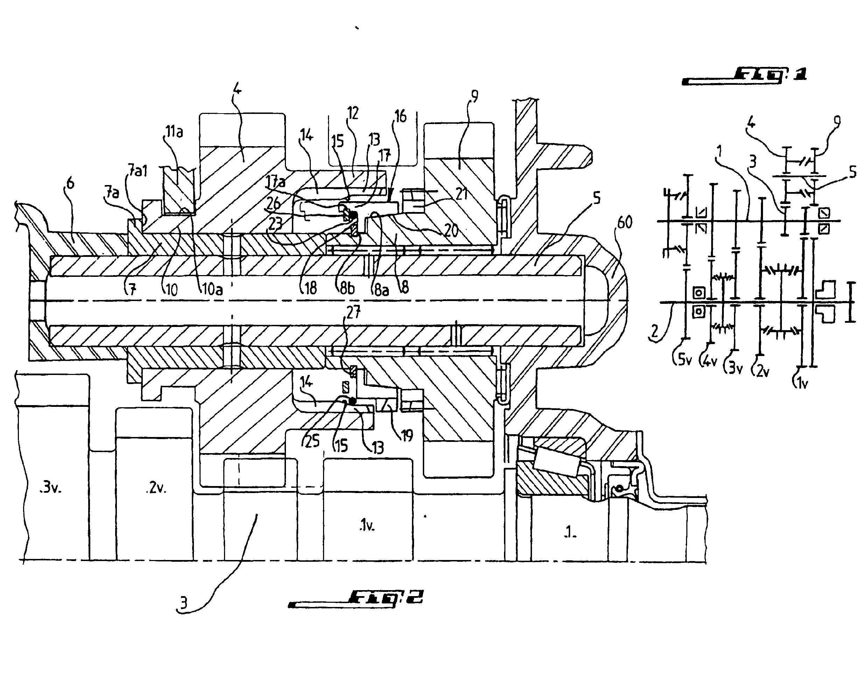

Dans la boîte de vitesses manuelle pour véhicule automobile représentée en figure 1, les références 1 et 2 désignent respectivement l'arbre primaire et l'arbre secondaire portant les paires d'engrenages qui doivent venir en prise sous la commande du levier de changement de vitesse (non représenté), le nombre d'engrenages dépendant du nombre de vitesses possibles du véhicule. Dans le cas présent, la boîte de vitesses est du type à cinq vitesses comme indiqué par 1v à 5v.

L'arbre primaire 1 porte un pignon de marche arrière 3 en engrènement avec le pignon intermédiaire de marche arrière 4 porté par un arbre intermédiaire 5.

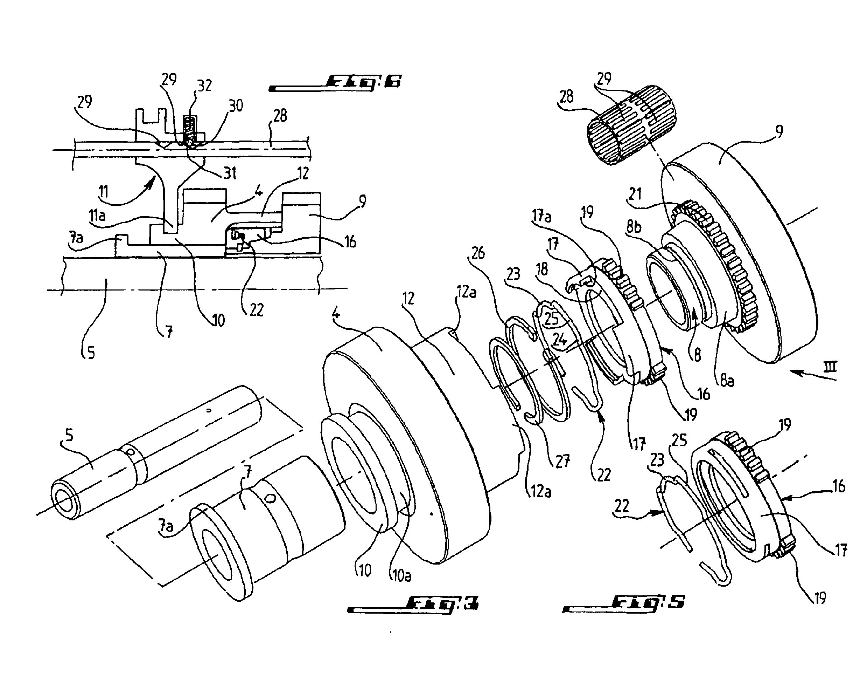

Comme représenté à la figure 2, l'arbre intermédiaire 5 est monté librement ou indexé dans le carter 60 d'embrayage et porte l'ensemble synchroniseur de marche arrière de l'invention qui va être décrit maintenant.

Cet ensemble comprend le pignon intermédiaire 4 qui est monté coulissant et à rotation relativement à l'arbre intermédiaire 5 par une bague allongée 7 réalisée en un matériau à faible coefficient de frottement et montée coaxialement sur l'arbre 5. La bague 7 est maintenue axialement fixe relativement à l'arbre 5 par ses deux extrémités, dont l'une est en appui sur une face radiale correspondante du carter 6 et l'autre extrémité est en appui sur une face radiale d'extrémité d'une partie annulaire 8 solidaire, à son extrémité opposée, d'un pignon de transmission 9, la partie annulaire 8 et le pignon 9 étant de préférence réalisés en une seule pièce. La bague 7 comporte une collerette 7a située à l'opposé de la partie annulaire 8 et sur la face radiale 7a1 de laquelle peut venir en appui l'extrémité d'une partie annulaire 10 faisant partie du pignon intermédiaire 4 et, de préférence, réalisée en une seule pièce avec celui-ci. La partie annulaire 10 comporte une gorge externe 10a dans laquelle est engagée l'extrémité libre 11a d'une fourchette de commande 11 qui sera décrite ultérieurement et qui commande le déplacement axial du pignon intermédiaire 4.

L'ensemble synchroniseur comprend en outre un manchon de crabotage 12 concentrique à l'arbre 5, situé à l'opposé de la partie annulaire 10 et qui est réalisé en une seule pièce avec le pignon intermédiaire 4.

Le manchon de crabotage 12 comporte à l'intérieur de celui-ci une partie circulaire d'entrée cannelée et une partie arrière circulaire cannelée, les dents 13 de la partie d'entrée du manchon 12 étant prolongée par les dents 14 de la partie circulaire arrière et raccordées respectivement à ces dernières par l'intermédiaire de rampes 15 allant en ascendant des dents 13 vers les dents 14 et définissant ainsi des portions de surfaces internes tronconiques.

L'ensemble synchroniseur comprend en outre une bague de synchronisation 16 disposée coaxialement à l'arbre 5 et pouvant être déplacée axialement relativement à celui-ci vers le pignon de transmission 9 lors du déplacement axial dans le même sens du pignon intermédiaire 4.

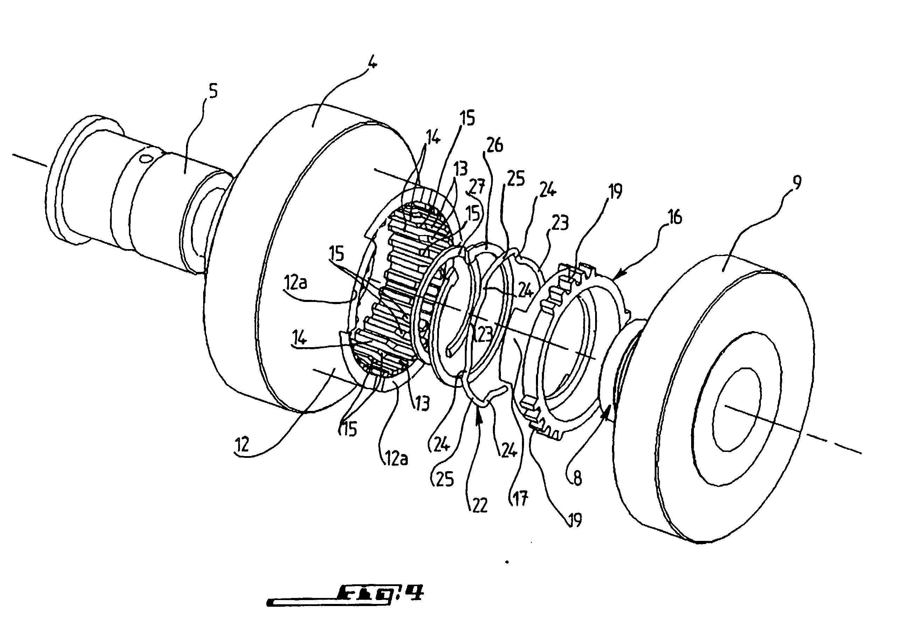

La bague de synchronisation 16 comprend, comme représenté aux figures 2 à 4, trois segments arqués 17 faisant saillie d'une face radiale 18 de la bague 16 vers le pignon intermédiaire 4 et logés dans le manchon de crabotage 12. La bague 16 comprend également à l'extérieur du manchon de crabotage 12 lorsque le pignon intermédiaire 4 est en position de point mort représentée en figure 2, trois secteurs dentés externes 19 qui sont angulairement équidistants les uns des autres.

Le manchon de crabotage 12 comporte trois segments arqués 12a espacés angulairement de façon équidistante les uns des autres et qui s'engagent respectivement dans les trois espaces définis entre les trois secteurs dentés 19. Les trois segments 12a permettent d'indexer la bague de synchronisation 16 relativement au manchon de crabotage 12 pour engager les dents des secteurs 19 entre les dents 13 de ce manchon lorsque le pignon intermédiaire 4 est accouplé au pignon de transmission 9.

La bague de synchronisation 16 comprend enfin une partie centrale délimitée par une surface tronconique 20 située à l'opposé des trois segments arqués 17 et qui peut venir en contact par friction sur une portée tronconique conjuguée 8a de la partie annulaire 8 lors du déplacement axial du manchon de crabotage 12 vers le pignon 9. Ce dernier comporte une couronne dentée de crabotage 21 solidaire concentriquement de ce pignon et située en regard du manchon de crabotage 12 et des secteurs dentés 19 de la bague de synchronisation 16.

L'ensemble synchroniseur comprend enfin un jonc élastique ouvert d'armement 22 de configuration plane et comprenant trois portions arquées rentrantes et équidistantes 23, chacune reliée par deux branches latérales 24 respectivement à deux portions saillantes arquées adjacentes 25, l'une des portions saillantes étant constituée par les deux branches d'extrémité en regard l'une de l'autre du jonc, rendant celui-ci ouvert comme cela ressort mieux de la figure 3.

Les trois portions rentrantes 23 du jonc 22 sont logées respectivement dans les trois segments arqués 17 de la bague de synchronisation 16 et maintenues dans ceux-ci par un anneau d'arrêt formant circlips 26 logé en partie dans trois rainures arquées radialement internes 17a des segments 17. Les trois portions saillantes 25 du jonc 22 font saillie radialement à l'extérieur des espaces entre les segments arqués 17 de la bague de synchronisation 16 et sont disposés avec un jeu, à la position de point mort de la figure 2, dans les zones correspondantes de transition entre les dents 13 et les rampes 15.

La bague de synchronisation 16 est bloquée axialement vers le pignon intermédiaire 4 par un anneau d'arrêt formant circlips 27 logé dans une gorge 8b de la partie annulaire 8 comme représenté en figure 2.

La partie annulaire 8 et le pignon 9 sont montés à rotation relativement à l'arbre 5 par l'intermédiaire d'une cage 28 à rouleaux cylindriques 29 formant palier et montée coaxialement sur l'arbre 5.

Le fonctionnement de l'ensemble synchroniseur ressort déjà de la description qui en a été faite ci-dessus et va être maintenant expliqué.

Lorsque le pignon intermédiaire 4 est déplacé vers la droite par rapport à la figure 2 par la fourchette de commande 11 lors du passage de la marche arrière, le manchon de crabotage 12 est également déplacé dans le même sens et les rampes 15 contactent les côtés des portions saillantes 25 du jonc d'armement 22 qui est déplacé axialement, tout en le comprimant radialement, par le manchon 12. Le déplacement axial du jonc d'armement 22 provoque le déplacement concomitant de la bague de synchronisation 16 vers le pignon 9 jusqu'à ce que la bague 16 soit liée en rotation au pignon 9 par sa surface interne tronconique 20 venant en contact par friction sur la portée tronconique conjuguée 8a de la partie annulaire 8, les secteurs dentés 19 de la bague 16 étant alors engagés entre les dents 13 du manchon de crabotage 12. A cette position qui correspond à la fin de la phase de synchronisation, les portions saillantes 25 du jonc d'armement 22, qui ont cheminé sur les rampes 15, se trouvent au début des dents 14 juste après la zone de transition de celles-ci avec les rampes 15, de sorte que le jonc de l'armement 22 est comprimé radialement au maximum. Le pignon intermédiaire 4 et le manchon de crabotage 12 continuent de se déplacer axialement relativement à l'arbre 5 jusqu'à ce que les dents 13 du manchon 12 viennent s'engager par engrènement avec la couronne de crabotage 21 de façon que le pignon intermédiaire 4 et le pignon 9 soient liés en rotation. Dans ces conditions, le passage de la marche arrière est effectué. Le marche arrière est maintenue en place non seulement par les anti-lachers de la couronne de crabotage 21 et des dents des cannelures internes du pignon intermédiaire 4 qui plaquent ce dernier contre le pignon 9, mais également par la fourchette de commande 11 qui va être décrite maintenant en référence à la figure 6.

Sur cette figure, la fourchette 11 est montée à coulissement commandé par le levier de changement de vitesse sur un axe fixe 28 s'étendant parallèlement à l'arbre 5. L'axe 28 comporte deux entailles ou encoches 29 réalisées le long d'une même génératrice de l'axe 28 et dans chacune desquelles peut s'engager une bille d'indexation 30 logée dans un perçage 31 de la fourchette 11 et rappelée élastiquement vers l'axe 28 par l'intermédiaire d'un ressort hélicoïdal 32 monté dans la fourchette 11 perpendiculairement à l'axe 28. Ainsi, lorsque le pignon intermédiaire 4 et le pignon 9 sont accouplés en rotation l'un à l'autre pour le passage de la marche arrière, le pignon intermédiaire 4 est maintenu à la position de marche arrière par la fourchette 11 verrouillée à l'axe 28 par la bille 30 maintenue par la force de rappel du ressort 32 dans l'encoche correspondante 29.

Pour désengager la marche arrière, la fourchette 11 est déplacée sur l'axe 28 vers la gauche par rapport à la figure 6 de façon à entraîner en translation le pignon intermédiaire 4 et le manchon de crabotage 12. Ce dernier entraîne par friction le jonc d'armement 22 dont les parties saillantes 25 sont maintenues élastiquement en contact avec les dents 14 définissant le passage circulaire arrière du manchon 12. De la sorte, le manchon 12 entraîne axialement dans le même sens la bague de synchronisation 16 non seulement par l'intermédiaire des portions saillantes 25 du jonc 22, mais également par l'intermédiaire de l'anneau d'arrêt 26 sur lequel sont en butée les portions rentrantes 23 de ce jonc. Lorsque le pignon intermédiaire 4 revient en position initiale de la figure 2, la bague de synchronisation 16 est en butée sur l'anneau d'arrêt 27, ce qui permet le réarmement du jonc d'armement 22.

Selon la variante de réalisation représentée en figure 5, la partie annulaire 17 de la bague de synchronisation 16 comprend trois fenêtres arquées radiales équidistantes à travers lesquelles font saillie respectivement les trois portions saillantes 25 du jonc d'armement 22. De la sorte, le nombre de pièces de l'ensemble synchroniseur est davantage réduit puisque la présence de l'anneau d'arrêt 26 de la première variante de réalisation de la bague 16 est inutile.

En réalisant l'ensemble synchroniseur ci-dessus décrit de telle façon que le pignon intermédiaire de marche arrière fasse également office de manchon de crabotage, le nombre de pièces de cet ensemble est réduit, conduisant ainsi à une réduction de son encombrement.

## Revendications

1. Ensemble synchroniseur de marche arrière pour une transmission d'un véhicule automobile, comprenant, montés sur un arbre intermédiaire (5), un pignon intermédiaire de marche arrière (4) en engrènement avec un pignon moteur de marche arrière (3) porté par un arbre primaire (1), un manchon de crabotage (12) pouvant être déplacé axialement suivant l'arbre intermédiaire (5) par une fourchette de commande (11), une bague de synchronisation (16) adjacente au manchon de crabotage (12) et pouvant être déplacée axialement par celui-ci, et un pignon de transmission (9) à couronne de crabotage (21) monté fou sur l'arbre intermédiaire (5) et axialement espacé de la bague de synchronisation (16) qui peut être liée en rotation par friction au pignon (9) lors d'un déplacement axial du manchon de crabotage (12) vers le pignon (9), **caractérisé en ce que** le manchon de crabotage (12) et le pignon intermédiaire de marche arrière (4) sont réalisés en une seule pièce, avec le pignon intermédiaire (4) monté axialement coulissant et librement en rotation relativement à l'arbre intermédiaire (5).

2. Ensemble synchroniseur selon la revendication 1, **caractérisé en ce qu'**il comprend un jonc élastique ouvert d'armement (22) de configuration plane, comprenant trois portions rentrantes (23), chacune située entre deux portions saillantes adjacentes (25) du jonc (22), et logées dans une partie annulaire (17) de la bague de synchronisation (16) en regard du manchon de crabotage (12), chaque portion saillante (25) du jonc d'armement (22) faisant saillie radialement à l'extérieur de la partie annulaire (17) de la bague de synchronisation (16) et **en ce que** le manchon de crabotage (12) est agencé pour contacter, lors de son déplacement axial relatif vers le pignon de transmission (9), les côtés des portions saillantes (25) du jonc d'armement (22) pour déplacer axialement le jonc d'armement (22) puis par ce dernier la bague de synchronisation (16) qui est amenée en engagement par friction avec le pignon de transmission (9).

3. Ensemble synchroniseur selon la revendication 2, **caractérisé en ce que** le manchon de crabotage (12) comprend des portions de surfaces internes tronconiques formant rampes (15) réalisées entre des dents internes (13) d'entrée du manchon de crabotage (12) et des dents internes arrière (14) de ce manchon qui définissent respectivement un passage circulaire de grand diamètre et un passage circulaire de petit diamètre et situées de façon adjacente aux portions saillantes (25) du jonc (22) pour les contacter et déplacer axialement le jonc (22) tout en le comprimant radialement lors du déplacement axial du manchon de crabotage (12) et l'amener en contact par friction dans le passage cylindrique interne de plus petit diamètre du manchon de crabotage (12).

4. Ensemble synchroniseur selon la revendication 2 ou 3, **caractérisé en ce que** la bague de synchronisation (16) a sa partie (17) de logement des portions rentrantes (23) du jonc d'armement (22) logée dans le manchon de crabotage (12) et son perçage central en partie délimité par une surface tronconique (20) pouvant venir en contact par friction sur une portée tronconique conjuguée (8a) du pignon de transmission (9) lors du déplacement axial du manchon de crabotage (12) et comporte, à l'opposé du manchon de crabotage (12), trois secteurs dentés externes (19) pouvant venir en engrènement avec les dents internes (13) du manchon de crabotage (12) lors du déplacement axial de ce dernier qui comporte trois segments d'indexation (12a) faisant saillie de la face radiale d'extrémité du manchon (12) et s'engageant respectivement dans trois espaces définis chacun entre deux secteurs dentés adjacents (19) de la bague de synchronisation (16).

5. Ensemble synchroniseur selon l'une des revendications 2 à 4, **caractérisé en ce que** les trois portions rentrantes (23) du jonc d'armement (22) sont maintenues dans la partie annulaire (17) de la bague de synchronisation (16) par un anneau d'arrêt (26) logé dans trois rainures arquées radialement internes (17a) réalisées respectivement dans trois segments arqués (17) définissant la paroi annulaire de la bague (16) et faisant saillie d'une face radiale d'extrémité de la bague de synchronisation (16).

6. Ensemble synchroniseur selon l'une des revendications 2 à 4, **caractérisé en ce que** la partie annulaire (17) de la bague de synchronisation (16) servant de logement aux portions rentrantes (23) du jonc d'armement (22) comprend trois fenêtres arquées radiales à travers lesquelles font saillie respectivement les trois portions saillantes (25) du jonc d'armement (22).

7. Ensemble synchroniseur selon l'une des revendications précédentes, **caractérisé en ce que** la bague de synchronisation (16) est maintenue axialement relativement au pignon de transmission (9) dans le sens opposé à celui d'engagement par friction avec ce dernier, par un anneau d'arrêt (27) monté dans une gorge externe (8b) d'une partie annulaire (8) solidaire du pignon de transmission (9).

8. Ensemble synchroniseur selon l'une des revendications précédentes, **caractérisé en ce que** la fourchette de commande (11) agit directement sur le pignon intermédiaire (4) qui est monté sur l'arbre intermédiaire (5) par l'intermédiaire d'une bague formant palier (7) en un matériau à faible coefficient de frottement.

9. Ensemble synchroniseur selon l'une des revendications précédentes, **caractérisé en ce que** la fourchette de commande (11) est montée à coulissement sur un axe fixe (28) comportant deux encoches (29) dans l'une desquelles est engagée une bille d'indexation (30) logée dans la fourchette (11) et rappelée élastiquement vers l'axe (28) par un ressort hélicoïdal (32) de façon à maintenir la fourchette (11) à une position de point mort du pignon intermédiaire (4) ou une position de maintien de celui-ci en marche arrière.

10. Boîte de vitesses pour véhicule automobile,
**caractérisée en ce qu'**elle comprend un ensemble synchroniseur de marche arrière tel que défini dans l'une quelconque des revendications précédentes.

## Patentansprüche

1. Rückwärtsgang-Synchronisiereinheit für ein Kraftfahrzeuggetriebe, umfassend, auf einer Zwischenwelle (5) montiert, ein Rückwärtsgang-Zwischenzahnrad (4), das mit einem von einer Primärwelle (1) getragenen Rückwärtsgang-Antriebszahnrad (3) in Eingriff ist, eine Klauenkupplungsmuffe (12), die axial längs der Zwischenwelle (5) durch eine Steuergabel (11) bewegt werden kann, einen der Klauenkupplungsmuffe (12) benachbarten Synchronisierring (16), der durch diese axial bewegt werden kann, und ein Übertragungszahnrad (9) mit einem Klauenkupplungskranz (21), das auf der Zwischenwelle (5) frei beweglich montiert ist und von dem Synchronisierring (16) axial entfernt ist, der bezüglich Drehung durch Reibung mit dem Zahnrad (9) bei einer axialen Bewegung der Klauenkupplungsmuffe (12) auf das Zahnrad (9) zu verbunden sein kann, **dadurch gekennzeichnet, dass** die Klauenkupplungsmuffe (12) und das Rückwärtsgang-Zwischenzahnrad (4) einstückig ausgeführt sind, wobei das Zwischenzahnrad (4) axial verschiebbar und bezüglich der Zwischenwelle (5) frei drehbar montiert ist.

2. Synchronisiereinheit nach Anspruch 1, **dadurch gekennzeichnet, dass** sie einen offenen elastischen Spannring (22) von ebener Ausbildung besitzt, der drei einspringende Abschnitt (23) aufweist, die jeweils zwischen zwei benachbarten vorspringenden Abschnitten (25) des Rings (22) gelegen sind und in einem ringförmigen Teil (17) des Synchronisierrings (16) gegenüber der Klauenkupplungsmuffe (12) untergebracht sind, wobei jeder vorspringende Abschnitt (25) des Spannrings (22) radial aus dem ringförmigen Teil (17) des Synchronisierrings (16) herausragt, und dass die Klauenkupplungsmuffe (12) ausgebildet ist, um bei ihrer axialen Relativbewegung auf das Übertragungszahnrad (9) zu die Seiten der vorspringenden Abschnitte (25) des Spannrings (22) zu berühren, um den Spannring (22) und dann durch diesen den Synchronisierring (16) axial zu bewegen, der durch Reibung mit dem Übertragungszahnrad (9) in Eingriff gebracht wird.

3. Synchronisiereinheit nach Anspruch 2, **dadurch gekennzeichnet, dass** die Klauenkupplungsmuffe (12) Rampen bildende innere kegelstumpfförmige Flächenabschnitte (15) besitzt, die zwischen inneren Eintrittszähnen (13) der Klauenklupplungsmuffe (12) und hinteren inneren Zähnen (14) dieser Muffe, die einen kreisförmigen Durchgang großen Durchmessers bzw. einen kreisförmigen Durchgang kleinen Durchmessers bilden, vorgesehen sind und an die vorspringenden Abschnitte (25) des Rings (22) angrenzend angeordnet sind, um sie zu berühren und den Ring (22) axial zu bewegen, indem er bei der axialen Bewegung der Klauenkupplungsmuffe (12) radial komprimiert wird, und ihn durch Reibung in dem inneren zylindrischen Durchgang kleineren Durchmessers der Klauenkupplungsmuffe (12) in Kontakt zu bringen.

4. Synchronisiereinheit nach Anspruch 2 oder 3, **dadurch gekennzeichnet, dass** der Teil (17) des Synchronisierrings (16) zur Aufnahme der einspringenden Abschnitte (23) des Spannrings (22) in der Klauenkupplungsmuffe (12) untergebracht ist und seine zentrale Bohrung zum Teil durch eine kegelstumpfförmige Fläche (20) begrenzt ist, die durch Reibung auf einer zugeordneten kegelstumpfförmigen Auflagefläche (8a) des Übertragungszahnrads (9) bei der axialen Bewegung der Klauenkupplungsmuffe (12) in Kontakt kommen kann, und der Synchronisierring auf der der Klauenkupplungsmuffe (12) entgegengesetzten Seite drei äußere gezahnte Sektoren (19) aufweist, die mit den inneren Zähnen (13) der Klauenkupplungsmuffe (12) bei deren axialen Bewegung in Eingriff kommen können, die drei Rastsegmente (12a) aufweist, die an der radialen Stirnseite der Muffe (12) vorstehen und in drei Räume eintreten, die jeweils zwischen zwei benachbarten gezahnten Sektoren (19) des Synchronisierrings (16) definiert sind.

5. Synchronisiereinheit nach einem der Ansprüche 2 bis 4, **dadurch gekennzeichnet, dass** die drei einspringenden Abschnitte (23) des Spannrings (22) in dem ringförmigen Teil (17) des Synchronisierrings (16) durch einen Sperrring (26) gehalten sind, der in drei radial inneren gebogenen Nuten (17a) untergebracht ist, die in drei gebogenen Segmenten (17) gebildet sind, die die ringförmige Wand des Rings (16) bilden und an einer radialen Stirnseite des Synchronisierrings (16) vorstehen.

6. Synchronisiereinheit nach einem der Ansprüche 2 bis 4, **dadurch gekennzeichnet, dass** der ringförmige Teil (17) des Synchronisierrings (16), der zur Aufnahme der einspringenden Abschnitte (23) des Spannrings (22) dient, drei gebogene radiale Fenster aufweist, durch die die drei vorspringenden Abschnitte (25) des Spannrings (22) vorstehen.

7. Synchronisiereinheit nach einem der vorhergehenden Ansprüche, **dadurch gekennzeichnet, dass** der Synchronisierring (16) axial bezüglich des Übertragungszahnrads (9) in der Richtung, die der Richtung des In-Eingriff-Kommens mit diesem durch Reibung entgegengesetzt ist, durch einen Sperrring (27) gehalten ist, der in einer äußeren Nut (8b) eines mit dem Übertragungszahnrad (9) fest verbundenen ringförmigen Teils (8) montiert ist.

8. Synchronisiereinheit nach einem der vorhergehenden Ansprüche, **dadurch gekennzeichnet, dass** die Steuergabel (11) direkt auf das Zwischenzahnrad (4) einwirkt, das auf der Zwischenwelle (5) über einen Ring (7) montiert ist, der ein Lager aus einem Werkstoff mit niedrigem Reibungskoeffizient bildet.

9. Synchronisiereinheit nach einem der vorhergehenden Ansprüche, **dadurch gekennzeichnet, dass** die Steuergabel (11) auf einer feststehenden Achse (28) verschiebbar montiert ist, die zwei Einschnitte (29) aufweist, in deren eine eine Einrastkugel (30) eintritt, die in der Gabel (11) untergebracht ist und durch eine Schraubenfeder (32) elastisch auf die Achse (28) zu zurückgeholt wird, so dass sie die Gabel (11) in einer Todpunktstellung des Zwischenzahnrads (4) oder einer Stellung des Halts dieses Zwischenzahnrads in Rückwärtsgang hält.

10. Kraftfahrzeuggetriebe, **dadurch gekennzeichnet, dass** es eine Rückwärtsgang-Synchronisiereinheit umfasst, wie sie in einem der vorhergehenden Ansprüche definiert ist.

## Claims

1. Gearbox with synchronised reverse gear for motor vehicles which has, fitted on an intermediate shaft (5), an intermediate reverse gear (4) engaging with a reverse drive gear (3), carried by a primary shaft (1), a jaw clutching sleeve (12) which can be moved axially along the intermediate shaft (5) by a selector fork (11), a synchronising ring (16) adjacent to the jaw clutching sleeve (12), which can be moved axially by it, and a transmission gear (9) with a jaw clutching ring (21) fitted loosely on the intermediate shaft (5) and axially at a distance from the synchronising ring (16), which may be connected to the gear (9) by friction in rotation when the jaw clutching sleeve (12) is moved axially towards the gear (9), **characterised in that** the jaw clutching sleeve (12) and the intermediate reverse gear (4) are made in a single piece with the intermediate gear (4) fitted to slide freely axially in rotation in relation to the intermediate shaft (5).

2. Synchronised gear according to claim 1, **characterised in that** it has an open flexible fitting retaining ring (22) with a flat configuration, which has three recessed portions (23), each situated between two adjacent projecting portions (23) of the retaining ring (22), housed in an annular part (17) of the synchronising ring (16) with reference to the jaw clutching sleeve (12), each projecting portion (25) of the fitting retaining ring (22) projecting radially to the outside of the annular part (17) of the synchronising ring (16), and that the jaw clutching sleeve (12) is put together to make contact with the sides of the projecting portions (25) of the fitting retaining ring (22) when it is moved relatively axially towards the transmission gear (9) to move the fitting retaining ring (22) axially, then through this the synchronising ring (16), which engages with the transmission gear (9) by friction.

3. Synchronised gear according to claim 2, **characterised in that** the jaw clutching sleeve (12) has portions with tapered internal surfaces forming ramps (15) made between the internal teeth (13) of the entry of the jaw clutching sleeve (12) and the rear internal teeth (14) of this sleeve, which define a circular passage with a large diameter and a circular passage with a small diameter respectively, situated adjacent to the projecting portions (25) of the retaining ring (22) to make contact with them and move the retaining ring (22) axially, whilst compressing it radially, when the jaw clutching sleeve (12) moves axially, and to bring it into contact by friction in the internal cylindrical passage of the jaw clutching sleeve (12) with the smaller diameter.

4. Synchronised gear according to claim 2 or 3, **characterised in that** the synchronising ring (16) has its part (17) for housing the recessed portions (23) of the fitting retaining ring (22) housed in the jaw clutching sleeve (12) and its central hole in the part delimited by a tapered surface (20) which may come into contact by friction on a connected tapered projection (8a) of the transmission gear (9), when the jaw clutching sleeve (12) moves axially, and opposite the jaw clutching sleeve (12) has three external toothed sections (19) which may engage with the internal teeth (13) of the jaw clutching sleeve (12) when it moves axially, which has three indexing segments (12a) projecting from the radial face of the end of the sleeve (12) engaging in three spaces respectively, each defined between two adjacent toothed sections (19) of the synchronising ring (16).

5. Synchronised gear according to one of claims 2 to 4, **characterised in that** the three recessed portions (23) of the fitting retaining ring (22) are maintained in the annular part (17) of the synchronising ring (16) by a lock ring (26) housed in three radially arched internal grooves (17) made in three arched segments (17) respectively, defining the annular wall of the ring (16) and projecting from a radial face of the end of the synchronising ring (16).

6. Synchronised gear according to one of claims 2 to 4, **characterised in that** the annular part (17) of the synchronising ring (16) serving as the housing for the recessed portions (23) of the fitting retaining ring (22) has three radial arched windows, through which the three projecting portions (25) of the fitting retaining ring (22) project respectively.

7. Synchronised gear according to one of the previous claims, **characterised in that** the synchronising ring (16) is maintained axially in relation to the transmission gear (9) in the direction opposite that of engagement with it by friction by a lock ring (27) fitted in an external groove (8b) of an annular part (8), which is integral with the transmission gear (9).

8. Synchronised gear according to one of the previous claims, **characterised in that** the selector fork (11) acts directly on the intermediate gear (4), which is fitted on the intermediate shaft (5) by means of a ring forming a bearing (7) in a material with a low friction coefficient.

9. Synchronised gear according to one of the previous claims, **characterised in that** the selector fork (11) is fitted to slide on a fixed shaft (28) which has two notches (29), in one of which an indexing ball (3) is engaged, housed in the fork (11), and returned flexibly towards the shaft (28) by a helicoidal spring (32) so as to maintain the fork (11) in a dead centre position of the intermediate gear (4) or a position maintaining it in reverse.

10. Gearbox for motor vehicle, **characterised in that** it comprises a synchronising reverse gear such as defined in any one of the previous claims.
